# EUROPEAN PATENT SPECIFICATION

(11) **EP 2 923 565 B1**
(45) Date of publication and mention of the grant of the patent: **15.08.2018**
(21) Application number: 15164933.2
(22) Date of filing: 15.02.2013
(51) Int. Cl.: A01K 1/00, B01D 53/58, B01D 53/78, B01D 53/00

(54) **METHOD AND DEVICE FOR SCRUBBING AIR FROM A STABLE INCLUDING HEAT RECOVERY**
VERFAHREN UND VORRICHTUNG ZUM WASCHEN VON STALLABLUFT UMFASSEND EINE WÄRMERÜCKGEWINNUNG
PROCÉDÉ ET DISPOSITIF POUR ÉPURER L'AIR D'UNE ÉTABLE AVEC RÉCUPÉRATION DE CHALEUR

(30) Priority: 15.02.2012 NL 1039381
(43) Date of publication of application: 30.09.2015
(62) Divisional of application: 13155398.4
(73) Proprietor: INNO+ Holding B.V., 5981 NB Panningen (NL)
(72) Inventor: ORTMANS, Maurice Caspar Joseph Maria, 5993 GL Maasbree (NL)
(74) Representative: Veldman-Dijkers, Cornelia G. C.

(56) References cited:
- EP-A1- 2 308 583
- DE-A1- 3 228 997
- DE-A1- 3 709 521
- DE-B3-102006 002 719
- US-B1- 6 374 623

## Description

The present invention relates to method for scrubbing air to be purified from a stable with an aqueous washing liquid, wherein the air to be purified is passed through a scrubber having an air supply side and an air discharge side and cleaned air exits the scrubber.

A method for scrubbing air to be purified from a stable with an aqueous washing liquid is known in the art, for instance from European patent application EP2308583. In the air discharge channel a scrubber is placed which comprises a matrix onto which the washing liquid is introduced, with which ammonia is removed from the air to be purified.

It is an object of the present invention to facilitate the capture of a contaminating gas from the air to be purified with a relatively high energy efficiency.

To this end, a method according to the preamble is characterized in that the method comprises the use of a heat exchanger which heat exchanger comprises a wall having a first side and a second side, wherein a cooling medium is passed along a first side of the wall,
wherein the aqueous washing liquid from the scrubber is subjected to heat exchange for the cooling down thereof using the heat exchanger before being re-used for scrubbing,
wherein the wall of the heat exchanger keeps the aqueous washing liquid and the cooling medium separated,
wherein the air to be purified is subjected to heat exchange prior to having passed the air discharge side of the scrubber by cooling down to below the dew point by the aqueous washing liquid whilst heat extracted using the heat exchanger is passed back into the stable.

Thus, a more efficient absorption of contaminating gas, such as odorous gas, from the air to be purified is achieved. Especially stables with chickens, pigs and meat calves would greatly benefit from the improved inside climate which is enabled in a cost efficient way by the method according to the invention. More specifically, an improved removal of ammonia is combined with energy efficiency. The heat can for instance be used for underfloor heating, for heating water and for heating food such as porridge for pigs. Because of the improved efficiency of scrubbing the contaminating gas from the air to be purified, the stable can be ventilated relatively more, which may beneficial for the well-being of living creatures in the stable. Furthermore, the consumption of water used as washing liquid or used for the preparation of the washing liquid is reduced. By cooling below the dew point water vapour condenses from the air to be purified. Thus, latent heat is converted into tangible heat. This is especially advantageous since animals because of their metabolism emit water vapour. With a normal ventilation of the stable the energy-content thereof is lost. With this particularly preferred method this heat is used. The strong cooling results in an even more efficient capture of contaminating gas. The condensed water is for instance discharged. Cooling to below the dew point can for instance be achieved by increasing the flow rate with which the cooling medium is passed through the heat exchanger. Also a cooling machine (heat pump; a heat exchanger operated using groundwater etc.) can be used. The more water vapour is condensed from the air to be purified, the more latent heat is recovered. The cooling comprises lowering the temperature of the air to be purified and/or the aqueous washing liquid with at least 3°C, preferably at least 5°C and more preferably at least 8°C by using the heat exchanger. The cooling of the flow of air to be purified preferably takes place in the air discharge channel or else directly before that wherein at least 35%, such as at least 50% and preferably at least 80% of the air is passed directly to the scrubber without first ending up in the stable again. In the scope of the present application the term contaminating gas also comprises a contaminating vapour.

By cooling down the washing liquid, the air resistance in the air discharge channel can be kept to a minimum since a separate heat exchanger present before the scrubber can be avoided and/or the capacity of this heat exchanger may be smaller. When the method is used for removing ammonia from the air to be purified, in practice at least part of the washing liquid will be subjected to a purification, for instance a biological purification for breaking down the ammonia, prior to cooling down the washing liquid using the heat exchanger.

The Japanese publication JP10005534 describes that air originating from a chamber with airconditioning is scrubbed before being discharged. According to this application a cooling coil is used to pre-cool (e.g. from 32°C to 26°) air that is passed towards the airconditioning of the chamber, wherein water is pumped through the cooling coil which water is cooled by the washing liquid. The washing liquid itself gets cold as a result of the vaporization of water from the washing liquid due to the scrubbing process.

It has to be noticed that a method for scrubbing air to be purified from a stable with an aqueous washing liquid is known in the art, in particular from page 11 of the German patent application DE3228997 (1982). In the air discharge channel a scrubber is placed which comprises a matrix onto which the washing liquid is introduced, with which ammonia is removed from the air to be purified. After passing through the scrubber, the scrubbed air is passed through a heat exchanger and cooled to below the dew point resulting in water condensing onto the heat exchanger. The water falls onto the matrix and serves to clean the air to be purified. The heat extracted with the heat exchanger used to cool to below the dew point is used for heating the stable (page 9). According to a favourable embodiment, the air to be purified is air that contains ammonia.

Removing ammonia from air to be purified at least partially is an important application of the method according to the invention.

According to the favourable embodiment the device comprises
a scrubber having an air supply side and an air discharge side wherein the air to be purified is passed through the scrubber and cleaned air exits the scrubber,
means to transport washing liquid from the scrubber back to the scrubber to be re-used for scrubbing,
wherein the device comprises a heat exchanger which heat exchanger comprises a wall having a first side and a second side, wherein a cooling medium is passed along a first side of the wall in use of the heat exchange),
wherein the aqueous washing liquid from the scrubber is subjected to heat exchange for the cooling down thereof using the heat exchanger before being re-used for scrubbing,
wherein the wall of the heat exchanger keeps the aqueous washing liquid and the cooling medium separated,
wherein the air to be purified is subjected to heat exchange prior to having passed the air discharge side of the scrubber by cooling down to below the dew point by the aqueous washing liquid whilst the device comprises means to pass back heat extracted using the heat exchanger into the stable.

According to a favourable embodiment, the stable has
- an air discharge channel, and
- an air supply channel
and the air discharge channel is provided with the scrubber wherein the air to be purified is subjected to the scrubbing in the air discharge channel.

Thus the air can be efficiently subjected to heat exchange and ammonia can be efficiently trapped. The air discharge channel passes air from the stable towards the atmosphere and via the air supply channel outside air is introduced into the stable.

According to a favourable embodiment, the heat recovered from the air is released to air that is supplied to the stable via the air supply channel.

Thus, the air in the stable can be heated. This permits the improvement of the living conditions and/or climate conditions in the stable and the saving of energy. Use will be made of a second heat exchanger which will be located right before, in or right behind the air supply channel. The term "right before" means that at least 50% and preferably at least 80% of the air passing through the second heat exchanger enters the air supply channel directly.

According to a favourable embodiment, the scrubber comprises a matrix and air to be purified from the stable is passed through the matrix, aqueous washing liquid is introduced onto a location that is located relatively high on the matrix and flows over the matrix, and the aqueous washing liquid is collected at a location that is located relatively low.

It has been found that when using the method according to the invention less formation of slime occurs on the matrix. Formation of slime on the matrix is a problem because the efficiency when purifying air decreases and the matrix needs to be cleaned. It is believed that because of the lower temperature the growth of microorganisms which are responsible for the formation of slime is slowed down.

According to an aspect not according to the present invention, the matrix is in the form of a heat exchanger having a coolant-circuit wherein while passing along the heat exchanger, coolant as the cooling medium is passed through the coolant-circuit and washing liquid is passed over the exterior surface of the heat exchanger.

Thus, pollution of the coolant is prevented, something which could adversely affect the efficiency of the heat exchanger when extracting heat and/or releasing heat to the stable. Further, the degree of cooling the air can be governed independently of the flow rate of the washing liquid. It is also possible to pass the coolant in counter-current with the air to be purified and in cross-flow with the washing liquid for an increased recovery of heat.

According to a favourable embodiment, the washing liquid is acidified water.

The present invention will now be illustrated with reference to the drawing where
Fig. 1 shows a cross-sectional top view of part of a stable not belonging to the present invention;
Fig. 2 shows a cross-sectional top view of part of an alternative stable not belonging to the present invention; and
Fig. 3 shows a cross-section in side view of a device for washing air and recovering heat according to the invention.

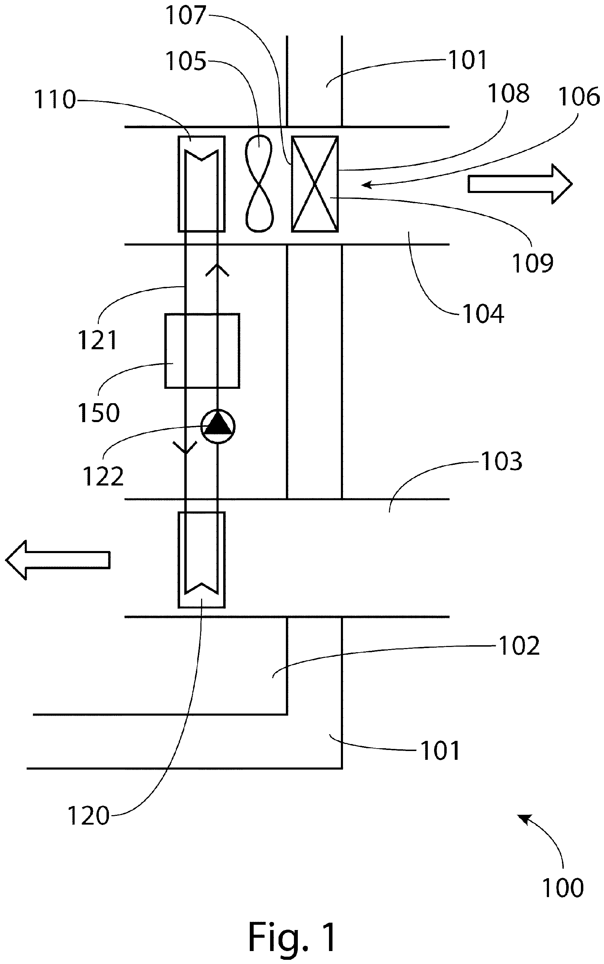

Fig. 1 shows part of a stable 100 with an exterior wall 101, which stable 100 has an interior space 102 in which animals such as pigs are kept which produce ammonia, a gaseous compound. In the exterior wall 101 an air supply channel 103 for fresh outside air and an air discharge channel 104 for the discharge of air from the stable 100 are provided. A fan 105 provides for the circulation of air.

In order not to pollute the outside air with ammonia from the stable 100, in the air discharge channel 104 a scrubber 106 is provided. The scrubber 106 has an air supply side 107 and an air discharge side 108. In the embodiment illustrated here the scrubber 106 comprises a matrix 109 over which acidified water is passed as a washing liquid for capturing ammonia from the air of the stable 100. This is known per se.

According to the invention the capturing is conducted at a reduced temperature. With the embodiment illustrated in Fig. 1 this takes place by lowering the temperature of the air from the stable 100 in the air discharge channel 104 by using a heat exchanger 110 with for instance at least 10°C.

Lowering the air temperature using the heat exchanger 110 has as a side effect that the density of the air increases, as a result of which the fan 105 here placed downstream of the heat exchanger 110 can operate a litte more efficiently.

The heat extracted from the air to be scrubbed can be used for heating air that is introduced via the air supply channel into the space 102, using a second heat exchanger 120.

The air supply channel 103 and the air discharge channel 104 are preferably spaced apart at a large distance in order to achieve that carbon dioxide emitted by animals is efficiently discharged and is not introduced into the space again. The heat exchanger 110 and the second heat exchanger 120 are connected with each other via conduits 121 and a working liquid - for instance a mixture of water and glycol - is circulated using a pump 122.

Fig. 1 also shows an optional cooling module 150 with which the working liquid is cooled further before it is passed towards the heat exchanger 110. Thus, also when the temperature in the space 102 is substantially equal to the outside temperature air to be purified can be cleaned efficiently. The heat that is extracted will advantageously be released to the space 102 or to the working liquid coming from the heat exchanger 110. Hereby, the capacity of the heat exchanger 110 and the second heat exchanger 120 may be smaller, which is advantageous for the flow resistance and the capital expense.

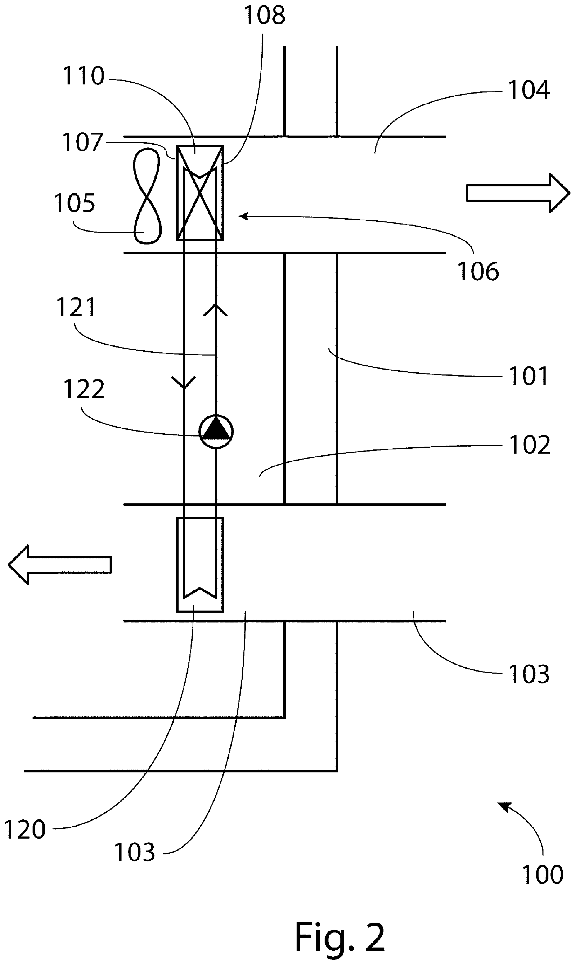

Fig. 2 shows a cross-sectional top view of an alternative embodiment of the stable of Fig. 1. The difference is that on the upper side of the heat exchanger 110 on heat exhanging elements thereof (for instance tubes, plates or fins) washing liquid is introduced that flows downwards along the heat exhanging elements. Thus the heat exchanger 110 functions as a scrubber, which means a saving of cost as well as a reduction of the air resistance through the air discharge channel 104.

An experiment was carried out in a stable 100 having a volume of ca. 16,000 m³ and 1 central air discharge channel 104 along which air was sucked off with a flow rate of 18,000 m³/ hour. The central air discharge channel 104 was provided with a plastic Calorplast heat exchanger 110 PE-RT 5RR (Calorplast Wärmetechnik GmbH, Krefeld, Germany) having a heat exchanging surface area of 5 m². A mixture of 25% glycol 75% water having a flow rate of 31 m³/h was circulated through the heat exchanger 110 using pumps 122. The temperature in the stable was 23°C and the temperature of the outside air varied between -10 and 10°C. The heat exchanger 110 acted simultaneously as a matrix for scrubbing gas, for which purpose 16 m³/h washing liquid was sprayed onto the heat exchanger 110 distributed over the upper side thereof. The washing liquid was aqueous sulphuric acid with a pH of 4.

It was found that the emission of odors diminished considerably. Further, also ammonia was removed very efficiently, the content dropping from 20 ppm to 5 ppm.

The device was used during a period of 4 months (under changing circumstances) during which no significant degree of formation of slime occurred on the scrubber 106, which was an improvement compared to the situation without cooling.

Cooling of the first heat exchanger 110 resulted in the formation of condensate, wherein the amount thereof varied between 51 litre/h (at an outside air temperature of 10°) and 171 litre/h (at a temperature of -10°). The incoming air was thereby heated to respectively 15.2°C and 8.2°C. The circulating of coolant required 1,0 kW. By letting the water vapour condense the COP can reach values of over 150!

Recovered heat can also be used for e.g. underfloor heating, wherein the temperature can be raised using a heat pump.

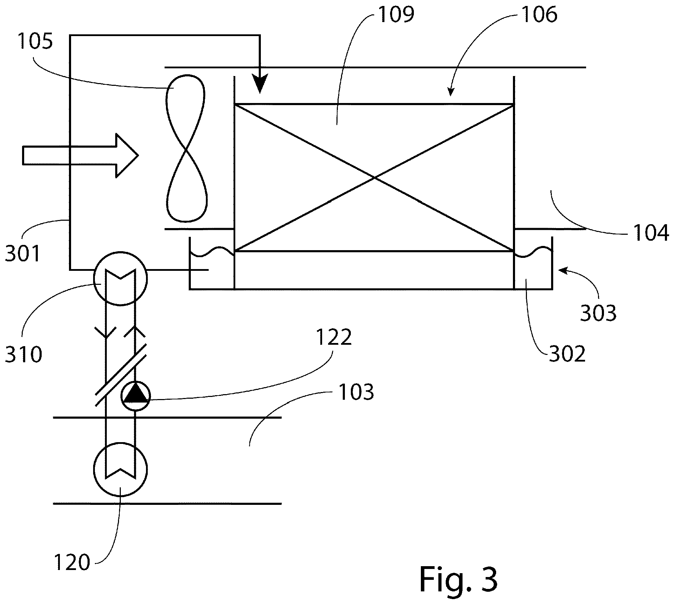

Fig. 3, in accordance with the present invention, shows a schematic representation of the scrubber 106 which comprises a matrix 109, wherein via a conduit 301 relatively cold washing liquid 302 is introduced onto the matrix 109. The washing liquid 302 is collected in a collection reservoir 303 and is heated by heat exchange with the air before it exits the scrubber 106. Heat is extracted from the washing liquid 302 by means of a fluid-fluid heat exchanger 310 for forming the relatively cold washing liquid 302. This embodiment can be used in the space 102 of a stable 100, as well as in an air discharge channel 104.

The method according to the invention can be varied in various ways within the scope of the claims.

### List of references

- 100: stable
- 101: exterior wall
- 102: interior space
- 103: air supply channel
- 104: air discharge channel
- 105: fan
- 106: scrubber
- 107: air supply side
- 108: air discharge side
- 109: matrix
- 110: first heat exchanger
- 120: second heat exchanger
- 121: conduit
- 122: pump
- 301: conduit
- 302: washing liquid
- 303: collection reservoir
- 310: fluid-fluid heat exchanger

## Claims

1. Method for scrubbing air to be purified from a stable (100) with an aqueous washing liquid (302), wherein the air to be purified is passed through a scrubber (106) having an air supply side (107) and an air discharge side (108) and cleaned air exits the scrubber (106)
wherein washing liquid (302) from the scrubber (106) is being re-used for scrubbing,
**characterized in that**
the method comprises the use of a heat exchanger (310) which heat exchanger (310) comprises a wall having a first side and a second side, wherein a cooling medium is passed along a first side of the wall,
wherein the aqueous washing liquid (302) from the scrubber (106) is subjected to heat exchange for the cooling down thereof using the heat exchanger (310) before being re-used for scrubbing,
wherein the wall of the heat exchanger (310) keeps the aqueous washing liquid (302) and the cooling medium separated,
wherein the air to be purified is subjected to heat exchange prior to having passed the air discharge side (108) of the scrubber (106) by cooling down to below the dew point by the aqueous washing liquid (302) whilst heat extracted using the heat exchanger (310) is passed back into the stable (100).

2. The method according to claim 1, wherein the air to be purified is air that contains ammonia.

3. The method according to claim 1 or 2, wherein the stable (100) has
- an air discharge channel (104), and
- an air supply channel (103)
and the air discharge channel (104) is provided with the scrubber (106) wherein the air to be purified is subjected to the scrubbing in the air discharge channel (104).

4. The method according claim 3, wherein the heat recovered from the air is released to air that is supplied to the stable (100) via the air supply channel (103).

5. The method according to any of the preceding claims, wherein the scrubber (106) comprises a matrix (109) and air to be purified from the stable (100) is passed through the matrix (109), aqueous washing liquid (302) is introduced onto a location that is located relatively high on the matrix (109) and flows over the matrix (109), and the aqueous washing liquid (302) is collected at a location that is located relatively low.

6. The method according to any of the preceding claims, wherein the washing liquid is acidified water.

7. A device for scrubbing air to be purified from a stable (100) with an aqueous washing liquid (302), which device comprises
a scrubber (106) having an air supply side (107) and an air discharge side (108) wherein the air to be purified is passed through the scrubber (106) and cleaned air exits the scrubber (106),
means to transport washing liquid (302) from the scrubber (106) back to the scrubber (106) to be re-used for scrubbing,
**characterized in that**
the device comprises a heat exchanger (310) which heat exchanger (310) comprises a wall having a first side and a second side, wherein a cooling medium is passed along a first side of the wall in use of the heat exchanger (310),
wherein the aqueous washing liquid (302) from the scrubber (106) is subjected to heat exchange for the cooling down thereof using the heat exchanger (310) before being re-used for scrubbing,
wherein the wall of the heat exchanger (310) keeps the aqueous washing liquid (302) and the cooling medium separated,
wherein the air to be purified is subjected to heat exchange prior to having passed the air discharge side (108) of the scrubber (106) by cooling down to below the dew point by the aqueous washing liquid (302) whilst the device comprises means to pass back heat extracted using the heat exchanger (310) into the stable (100) .

8. A device according to claim 7 or 10 comprising
- an air discharge channel (104), and
- an air supply channel (103)
and the air discharge channel (104) is provided with the scrubber (106) wherein the air to be purified is subjected to the scrubbing in the air discharge channel (104).

9. A device according to claim 8, wherein the device comprises means to release heat recovered from the air to air supplied to the stable (100) via the air supply channel (103).

10. A device according to any of the preceding claims 7-9, wherein the scrubber (106) comprises a matrix (109) and air to be purified from the stable (100) is passed through the matrix (109), aqueous washing liquid (302) is introduced onto a location that is located relatively high on the matrix (109) and flows over the matrix (109), and the aqueous washing liquid (302) is collected at a location that is located relatively low.

## Patentansprüche

1. Verfahren zum Waschen von zu reinigender Luft aus einem Stall (100) mit einer wässrigen Waschflüssigkeit (302), wobei die zu reinigende Luft durch einen Wäscher (106) mit einer Luftzufuhrseite (107) und einer Luftauslassseite (108) geleitet wird und gesäuberte Luft aus dem Wäscher (106) austritt,
wobei Waschflüssigkeit (302) aus dem Wäscher (106) zum Waschen wiederverwendet wird,
**dadurch gekennzeichnet, dass**
das Verfahren die Verwendung eines Wärmetauschers (310) aufweist, wobei der Wärmetauscher (310) eine Wand mit einer ersten Seite und einer zweiten Seite hat, wobei ein Kühlmedium entlang einer ersten Seite der Wand geleitet ist,
wobei die wässrige Waschflüssigkeit (302) aus dem Wäscher (106) vor der Wiederverwendung zum Waschen einem Wärmeaustausch zum Abkühlen derselben mithilfe des Wärmetauschers (310) unterzogen wird,
wobei die Wand des Wärmetauschers (310) die wässrige Waschflüssigkeit (302) und das Kühlmedium getrennt hält,
wobei die zu reinigende Luft, bevor dieselbe die Luftauslassseite (108) des Wäschers (106) passiert hat, einem Wärmeaustausch durch Abkühlen unter den Taupunkt durch die wässrige Waschflüssigkeit (302) unterzogen wird, während mithilfe des Wärmetauschers (310) entzogene Wärme in den Stall (100) zurückgeleitet wird.

2. Verfahren gemäß Anspruch 1, wobei die zu reinigende Luft Ammoniak enthaltende Luft ist.

3. Verfahren gemäß Anspruch 1 oder 2, wobei der Stall (100)
- einen Luftauslasskanal (104) und
- einen Luftzufuhrkanal (103)
hat und der Luftauslasskanal (104) mit dem Wäscher (106) versehen ist, wobei die zu reinigende Luft dem Waschen in dem Luftauslasskanal (104) unterzogen wird.

4. Verfahren gemäß Anspruch 3, wobei die aus der Luft zurückgewonnene Wärme in Luft abgegeben wird, die über den Luftzufuhrkanal (103) dem Stall (100) zugeführt wird.

5. Verfahren gemäß einem der vorstehenden Ansprüche, wobei der Wäscher (106) eine Matrix (109) aufweist und zu reinigende Luft aus dem Stall (100) durch die Matrix (109) geleitet wird, wässrige Waschflüssigkeit (302) auf eine Stelle eingebracht wird, die relativ hoch an der Matrix (109) liegt, und über die Matrix (109) strömt, und die wässrige Waschflüssigkeit (302) an einer Stelle aufgefangen wird, die relativ niedrig liegt.

6. Verfahren gemäß einem der vorstehenden Ansprüche, wobei die Waschflüssigkeit angesäuertes Wasser ist.

7. Vorrichtung zum Waschen von zu reinigender Luft aus einem Stall (100) mit einer wässrigen Waschflüssigkeit (302), wobei die Vorrichtung aufweist:
einen Wäscher (106) mit einer Luftzufuhrseite (107) und einer Luftauslassseite (108), wobei die zu reinigende Luft durch den Wäscher (106) geleitet ist und gesäuberte Luft aus dem Wäscher (106) austritt,
eine Einrichtung zum Transportieren der Waschflüssigkeit (302) aus dem Wäscher (106) zurück zu dem Wäscher (106) zur Wiederverwendung zum Waschen,
**dadurch gekennzeichnet, dass**
die Vorrichtung einen Wärmetauscher (310) aufweist, wobei der Wärmetauscher (310) eine Wand mit einer ersten Seite und einer zweiten Seite hat, wobei bei der Verwendung des Wärmetauschers (310) ein Kühlmedium entlang einer ersten Seite der Wand geleitet ist,
wobei die wässrige Waschflüssigkeit (302) aus dem Wäscher (106) vor der Wiederverwendung zum Waschen einem Wärmeaustausch zum Abkühlen derselben mithilfe des Wärmetauschers (310) unterzogen ist,
wobei die Wand des Wärmetauschers (310) die wässrige Waschflüssigkeit (302) und das Kühlmedium getrennt hält,
wobei die zu reinigende Luft, bevor dieselbe die Luftauslassseite (108) des Wäschers (106) passiert hat, einem Wärmeaustausch durch Abkühlen unter den Taupunkt durch die wässrige Waschflüssigkeit (302) unterzogen ist, während die Vorrichtung eine Einrichtung aufweist, um mithilfe des Wärmetauschers (310) entzogene Wärme in den Stall (100) zurückzuleiten.

8. Vorrichtung gemäß Anspruch 7 oder 10, die
- einen Luftauslasskanal (104) und
- einen Luftzufuhrkanal (103)
aufweist, und wobei der Luftauslasskanal (104) mit dem Wäscher (106) versehen ist, wobei die zu reinigende Luft dem Waschen in dem Luftauslasskanal (104) unterzogen ist.

9. Vorrichtung gemäß Anspruch 8, wobei die Vorrichtung eine Einrichtung aufweist, um aus der Luft zurückgewonnene Wärme in Luft abzugeben, die über den Luftzufuhrkanal (103) dem Stall (100) zugeführt ist.

10. Vorrichtung gemäß einem der vorstehenden Ansprüche 7 - 9, wobei der Wäscher (106) eine Matrix (109) aufweist und zu reinigende Luft aus dem Stall (100) durch die Matrix (109) geleitet ist, wässrige Waschflüssigkeit (302) auf eine Stelle eingebracht ist, die relativ hoch an der Matrix (109) liegt, und über die Matrix (109) strömt, und die wässrige Waschflüssigkeit (302) an einer Stelle aufgefangen ist, die relativ niedrig liegt.

## Revendications

1. Procédé de purification d'air à purifier provenant d'une écurie (100) avec un liquide de lavage aqueux (302), dans lequel l'air à purifier passe à travers un purificateur (106) ayant un côté d'alimentation en air (107) et un côté d'évacuation d'air (108) et l'air nettoyé sort du purificateur (106)
dans lequel le liquide de lavage (302) provenant du purificateur (106) est réutilisé pour la purification,
**caractérisé en ce que**
le procédé comprend l'utilisation d'un échangeur de chaleur (310), lequel échangeur de chaleur (310) comprend une paroi ayant un premier côté et un second côté, dans lequel un milieu de refroidissement passe le long d'un premier côté de la paroi,
dans lequel le liquide de lavage aqueux (302) provenant du purificateur (106) est soumis à un échange de chaleur pour son refroidissement à l'aide de l'échangeur de chaleur (310) avant d'être réutilisé pour la purification,
dans lequel la paroi de l'échangeur de chaleur (310) garde le liquide de lavage aqueux (302) et le milieu de refroidissement séparés,
dans lequel l'air à purifier est soumis à un échange de chaleur avant de passer du côté d'évacuation d'air (108) du purificateur (106) en refroidissant jusqu'à une température inférieure au point de rosée par le liquide de lavage aqueux (302) tandis que la chaleur extraite à l'aide de l'échangeur de chaleur (310) passe à nouveau dans l'écurie (100).

2. Procédé selon la revendication 1, dans lequel l'air à purifier est de l'air qui contient de l'ammoniac.

3. Procédé selon la revendication 1 ou 2, dans lequel l'écurie (100) comporte
- un canal d'évacuation d'air (104), et
- un canal d'alimentation en air (103)
et le canal d'évacuation d'air (104) est pourvu du purificateur (106), dans lequel l'air à purifier est soumis à la purification dans le canal d'évacuation d'air (104).

4. Procédé selon la revendication 3, dans lequel la chaleur récupérée depuis l'air est relâchée dans l'air qui est fourni à l'écurie (100) via le canal d'alimentation en air (103).

5. Procédé selon l'une quelconque des revendications précédentes, dans lequel le purificateur (106) comprend une matrice (109) et l'air à purifier provenant de l'écurie (100) passe à travers la matrice (109), le liquide de lavage aqueux (302) est introduit sur un emplacement qui est situé relativement haut sur la matrice (109) et s'écoule sur la matrice (109), et le liquide de lavage aqueux (302) est recueilli à un emplacement qui est situé relativement bas.

6. Procédé selon l'une quelconque des revendications précédentes, dans lequel le liquide de lavage est de l'eau acidifiée.

7. Dispositif de purification d'air à purifier provenant d'une écurie (100) avec un liquide de lavage aqueux (302), lequel dispositif comprend
un purification (106) ayant un côté d'alimentation en air (107) et un côté d'évacuation d'air (108) dans lequel l'air à purifier passe à travers le purificateur (106) et l'air nettoyé sort du purificateur (106),
un moyen de transport de liquide de lavage (302) depuis le purificateur (106) de retour dans le purificateur (106) pour être réutilisé pour la purification,
**caractérisé en ce que**
le dispositif comprend un échangeur de chaleur (310) lequel échangeur de chaleur (310) comprend une paroi ayant un premier côté et un second côté, dans lequel un milieu de refroidissement passe le long d'un premier côté de la paroi pendant l'utilisation de l'échangeur de chaleur (310),
dans lequel le liquide de lavage aqueux (302) provenant du purificateur (106) est soumis à un échange de chaleur pour son refroidissement à l'aide de l'échangeur de chaleur (310) avant d'être réutilisé pour la purification,
dans lequel la paroi de l'échangeur de chaleur (310) garde le liquide de lavage aqueux (302) et le milieu de refroidissement séparés,
dans lequel l'air à purifier est soumis à un échange de chaleur avant de passer le côté d'évacuation d'air (108) du purificateur (106) en refroidissant jusqu'à une température inférieure au point de rosée par le liquide de lavage aqueux (302) tandis que le dispositif comprend un moyen pour passer de nouveau la chaleur extraite à l'aide de l'échangeur de chaleur (310) dans l'écurie (100).

8. Dispositif selon la revendication 7 ou 10, comprenant
- un canal d'évacuation d'air (104), et
- un canal d'alimentation en air (103)
et le canal d'évacuation d'air (104) est pourvu du purificateur (106), dans lequel l'air à purifier est soumis à la purification dans le canal d'évacuation d'air (104) .

9. Dispositif selon la revendication 8, dans lequel le dispositif comprend un moyen pour relâcher la chaleur récupérée depuis l'air, dans l'air fourni à l'écurie (100) via le canal d'alimentation en air (103).

10. Dispositif selon l'une quelconque des revendications 7 à 9 précédentes, dans lequel le purificateur (106) comprend une matrice (109) et l'air à purifier provenant de l'écurie (100) passe à travers la matrice (109), le liquide de lavage aqueux (302) est introduit sur un emplacement qui est situé relativement haut sur la matrice (109) et s'écoule sur la matrice (109), et le liquide de lavage aqueux (302) est recueilli à un emplacement qui est situé relativement bas.
